(19) Europäisches Patentamt

European Patent Office

Office européen des brevets

(11) Veröffentlichungsnummer: **0 208 060 B1**

# (12) EUROPÄISCHE PATENTSCHRIFT

(45) Veröffentlichungstag der Patentschrift: **02.06.93**

(21) Anmeldenummer: **86104026.9**

(22) Anmeldetag: **24.03.86**

(51) Int. Cl.5: **G01B 11/10**

(54) **Verfahren und Messanlage zur Durchmesserbestimmung der Räder von Radsätzen.**

(30) Priorität: **26.06.85 DE 3522810**

(43) Veröffentlichungstag der Anmeldung:
**14.01.87 Patentblatt 87/03**

(45) Bekanntmachung des Hinweises auf die
Patenterteilung:
**02.06.93 Patentblatt 93/22**

(84) Benannte Vertragsstaaten:
**DE FR GB IT**

(56) Entgegenhaltungen:
**WO-A-81/02628**
**CH-A- 552 196**
**DE-A- 2 236 730**

(73) Patentinhaber: **Wilhelm Hegenscheidt Gesellschaft mbH**
**Neusser Strasse 3**
**W-5140 Erkelenz(DE)**

(72) Erfinder: **Schmalfuss, Harald, Dipl.-Phys.**
**Rosenring 11a**
**W-6054 Rodgau 3(DE)**
Erfinder: **Schneider, Bernhard**
**Weilbächer Wälder 12**
**W-6238 Hofheim(DE)**
Erfinder: **Sinsel, Friedel**
**Severusstrasse 49**
**W-6000 Frankfurt 50(DE)**
Erfinder: **Heinze, Werner**
**Prieststrasse 15**
**W-6000 Frankfurt(DE)**
Erfinder: **Bolz, Reinhold, Dipl.-Ing.**
**Weingartenstrasse 6**
**W-6093 Flörsheim(DE)**

(74) Vertreter: **Liermann, Manfred**
**Schillingsstrasse 335**
**W-5160 Düren (DE)**

## Beschreibung

Die Erfindung betrifft ein Verfahren zur Durchmesserbestimmung der Räder von Radsätzen, sowie eine Meßanlage hierzu.

Es sind im Stand der Technik vielerlei Einrichtungen und Verfahren zur Bestimmung des Durchmessers der Räder von Radsätzen bekannt und es ist hierbei immer notwendig, die zu vermessenden Radsätze zur Durchführung des Meßverfahrens aus dem Fahrzeug auszubauen und in einen entsprechenden Meßstand einzubringen. Soweit ein Ausbau des Radsatzes im Rahmen vorgeschriebener Wartungsarbeiten erfolgen kann, ist der notwendige Ausbau des zu vermessenden Radsatzes nicht störend.

In vielen Fällen muß jedoch eine Durchmesserbestimmung außerhalb des Zeitraumes der beschriebenen Wartungsarbeiten durchgeführt werden, beispielsweise um im Rahmen prophylaktischer Untersuchungen die Durchmessergleichheit der Räder eines Radsatzes oder der Räder der Radsätze eines Drehgestells zu bestimmen, oder aber um Einstelldaten für eine Unterflurreprofilierungsmaschine zu liefern, die ja eine Reprofilierung ohne den Ausbau der Radsätze durchführen kann. Bei der Durchmesserbestimmung als Vorbereitung für eine Reprofilierung auf einer Unterflurreprofilierungsmaschine und bei der genannten prophylaktischen Durchmesserbestimmung zur Überprüfung, ob die gewünschte oder notwendige Durchmessergleichheit noch vorliegt, wurde es als vorteilhaft erkannt, wenn die Durchmesserbestimmung mindestens am langsam fahrenden Fahrzeug durchgeführt werden kann.

Mit der US-4,155,526 ist es bekannt gworden, ein Schienenfahrzeug auf seinen Rädern auf Schienen durch eine Meßeinrichtung zu fahren. Dort werden Sehnenlängen im Bereich des Spurkranzes, der Außenseite einer Radlauffläche und der Innenseite des Radkranzdurchmessers mit Hilfe von in vorgegebener Bogenhöhe angordneter Näherungsinitiatoren bestimmt, die in festen Abständen zueinander angeordnet sind. Exakte Messungen sind mit einer solchen Einrichtung nicht möglich, da Näherungsinitiatoren einen zu großen Streubereich aufweisen. Außerdem könnten allenfalls die Durchmesser der von den Näherungsinitiatoren abgetasteten, umlaufenden Kanten, nicht aber eines Durchmessers einer Umfangsfläche wie z.B. der Radlauffläche eines Rades ermittelt werden. Es kann auch aus den gemessenen Daten nicht ein Durchmesser einer Umfangsfläche errechnet werden, da der Verschleißzustand der Umfangsfläche unbekannt ist.

Der Erfindung liegt damit die Aufgabe zugrunde, ein Verfahren und eine Meßanlage vorzuschlagen, zur Ermöglichung einer Durchmesserbestimmung der Räder von Radsätzen derart, daß ein Ausbau der Radsätze nicht erforderlich ist. Gleichwohl sollen natürlich bei Bedarf auch ausgebaute Radsätze vermessen werden können.

Verfahrensmäßig ist diese Aufgabe der Erfindung dadurch gelöst, daß ein Radsatz mit zu vermessenden Rädern relativ und parallel zu einer beliebigen, als Bezugsebene dienenden, tangential zu den Rädern verlaufenden Ebene bewegt und die Geschwindigkeit der Bewegung bestimmt wird, daß der Zeitbedarf gemessen wird, den ein in der Ebene des zu messenden Durchmessers liegendes Teilstück eines zu vermessenden Rades für das Durchlaufen einer definierten Wegstrecke benötigt, wobei die Länge des Teilstückes in bestimmter, durch eine Funktion gegebener Weise vom Raddurchmesser abhängt, und daß aus der Geschwindigkeit, dem Zeitbedarf und den Kenndaten der definierten Wegstrecke die Länge des Teilstückes und daraus unter Verwendung der Funktion der Durchmesser des Rades berechnet wird.

Der in der erfindungsgemäßen Weise ermittelte Raddurchmesser kann nicht nur in der eingangs beschriebenen Weise verwendet werden, sondern kann auch dazu verwendet werden, im Zusammenhang mit der Fahrzeuggeschwindigkeit den Achsenabstand der Radsätze im Fahrzeug und/oder Drehgestell zu errechnen. Hierdurch kann häufig der Fahrzeughersteller und der Fahrzeugtyp festgestellt werden.

Nach einer Ausgestaltung des erfindungsgemäßen Verfahrens wird vorgeschlagen, daß zur Bestimmung der Beschleunigung die Geschwindigkeit mehrfach hintereinander gemessen wird.

Es wird ergänzend nach der Erfindung noch vorgeschlagen, daß mehrfach hintereinander der Zeitbedarf gemessen wird, den Teilstücke des zu vermessenden Rades für das Durchlaufen definierter Wegstrecken benötigen, wobei die Länge der Teilstücke in bestimmter, durch eine Funktion gegebener Weise vom Raddurchmesser abhängt; und daß aus der Geschwindigkeit, Beschleunigung, dem jeweils ermittelten Zeitbedarf und den Kenndaten der definierten Wegstrecken die Längen der jeweiligen Teilstücke und daraus unter Verwendung der Funktion der Durchmesser des Rades berechnet wird.

Auch wird nach der Erfindung noch vorgeschlagen daß die Räder eines Radsatzes auf je einer Schiene abgerollt werden, wobei die Schienen eine Laufebene bilden, die mit der Bezugsebene identisch ist.

Schließlich wird nach der Erfindung noch vorgeschlagen, daß ein eine Mittelachse aufweisendes elektromagnetisches Strahlenbündel, das in der Ebene des zu messenden Durchmesssers verläuft, in dieser Ebene senkrecht zur Mittelachse des Strahlenbündels bezüglich des Rades verschoben wird, so lange, bis das Strahlenbündel die Umfangsfläche des Rades zweimal tangierend berührt hat, daß weiter die bei tangentialer Berührung von der Radumfangsfläche remittierende Strahlung erfaßt wird und der zwischen den Berührungspunkten liegende, vom Strahlenbündel zurückgelegte Weg, der dem Raddurchmesser entspricht, ermittelt wird. Dies ist eine besonders einfache Methode zur Durchmesserbestimmung.

Eine Einrichtung zur Durchmesserbestimmung der Räder von Radsätzen von Schienenfahrzeugen des erfindungsgemäßen Verfahrens zeichnet sich dadurch aus, daß für einen Radsatz eine Trageinrichtung vorgesehen ist, sowie eine Einrichtung mit mindestens zwei abstrahlenden, je eine Mittelachse aufweisenden, elektromagnetischen Strahlenbündeln, die mindestens angenähert in der Ebene des zu messenden Durchmessers verlaufen und die in dieser Ebene einen Grundabstand zueinander aufweisen und in dieser Ebene und senkrecht zu ihrer Mittelachse relativ zum Radsatz unter Beibehaltung ihres Grundabstandes bewegbar angeordnet sind, sowie mindestens einer oder einem jedem Strahlenbündel zugeordneten Empfangsoptik oder Empfänger zur Erfassung von bei tangentialer Berührung der Radumfangs fläche mit dem Strahlenbündel remittierter Strahlung, wobei die Empfangsoptiken oder Empfänger mit einer Zeiterfassungs- und einer Auswerteeinrichtung verbunden sind und wobei die Strahlen eine Wellenlänge von 200 - 2000 nm aufweisen. Vorzugsweise werden die Strahlenbündel von Laser-Strahlenbündeln gebildet und es ist die Trageinrichtung als je Rad der Radsätze eine Laufebene bildende Schiene ausgebildet. Auf der die Laufebene bildenden Schiene wird das Rad entlang bewegt und durchquert hierbei in der lateral festgelegten Ebene, in der der Durchmesser des Rades ermittelt werden soll, die nach oben gerichteten Strahlenbündel. Das entsprechende Lasergerät muß vorher eingeschaltet sein. Dies kann entweder manuell geschehen oder beispielsweise durch einen Schienenschalter, der von dem ankommenden Radsatz betätigt wird, und der dann die entsprechende Lasereinrichtung einschaltet. Wenn nun der einlaufende Radsatz den ersten Laserstrahl tangential berührt, wird dies durch eine diffuse Abstrahlung des Laserlichts im Berührungspunkt deutlich. Das diffus abgestrahlte Licht wird von einer Empfangsoptik registriert, die ihrerseits aufgrund dieser Registrierung in einer Zeiterfassungseinrichtung eine Zeitmarke setzt. Das Rad rollt nun ungehindert weiter und erreicht in tangentialer Berührung das nächste Laser-Strahlenbündel. Auch diese tangentiale Berührung wird durch eine Empfangsoptik festgestellt und es wird, ausgelöst von dieser Empfangsoptik, wiederum eine Zeitmarke gesetzt. Der Abstand der beiden genannten Strahlenbündel voneinander - dies ist der Grundabstand- ist durch die Konstruktion der Anlage bekannt und kann z. B. kleiner oder größer sein als ein zu erwartender Raddurchmesser. Aus der Zeit, die zwischen den beiden Berührungen der beiden Laser-Strahlenbündel durch die Umfangsfläche des Rades vergangen ist und dem bekannten Grundabstand zwischen den beiden Laserstrahlenbündeln läßt sich mit einer Auswerteinrichtung die Geschwindigkeit des Rades errechnen.

Mit dem Berühren des in Rollrichtung zweiten Laserstrahlenbündels wird z.B. dann, wenn der Grundabstand kleiner ist als der zu messende Raddurchmesser, über die zugeordnete Empfangsoptik gleichzeitig ein neuer Zeitabschnitt gestartet, der erst wieder gestoppt wird, wenn die Rückseite der Radumfangsfläche das in Einlaufrichtung der Einrichtung erste Laser-Strahlenbündel wieder tangential berührt. Diese tangentiale Berührung wird wieder von der zugehörigen Empfangsoptik registriert und es wird der genannte Zeitabschnitt damit gestoppt. Dieser Zeitabschnitt ist in seiner Größe bei z. B. immer gleicher Geschwindigkeit des Rades direkt abhängig vom Durchmesser des Rades. Bei der vorbeschriebenen Konstruktion ist die Errechnung des Durchmessers besonders einfach, denn sie ergibt sich aus dem Abstand der beiden Laser-Strahlenbündel und dem Produkt aus dem zuletzt benannten Zeitabschnitt mit der Geschwindigkeit des Rades. Die Empfänger bzw. Empfangsoptiken müssen immer so ausgebildet sein, daß sie die als Reaktion der tangentialen Berührung des jeweiligen Strahlenbündels mit der Radumfangsfläche von dieser abgestrahlte Strahlung auch empfangen können. Die Empfänger bzw. Empfangsoptiken müssen daher auf die verwendete elektromagnetische Strahlung abgestimmt sein. Der Einfachheit halber soll nachfolgend immer der Begriff Empfangsoptik verwendet werden, der aber auch den Begriff Empfänger umfassen soll.

Vorzugsweise sind die genannten Laser-Strahlenbündel und die ihr zugeordneten Empfangsoptiken mehrfach, jeweils um einen Streckenbetrag versetzt zueinander, vorgesehen. Hierdurch gelingt es eine Mehrfachmessung durchzuführen, die eine höhere Meßsicherheit und eine höhere Meßgenauigkeit ergibt und die es erlaubt, Beschleunigungsanteile zu erfassen.

Es ist auch vorteilhaft, wenn bei der genannten Mehrfachanordnung der Versatz kleiner ist als der Grundabstand, weil hierdurch die Beschleunigungsanteile sicherer erfaßt werden können.

Eine vorteilhafte Ausgestaltung wird nach der Erfindung noch darin gesehen, daß die vorhandenen Strahlenbündel frei gewählte Abstände untereinander aufweisen, die kleiner sind als der kleinste zu messende Durchmesser, und in einem frei gewählten Abstand zur Laufebene angeordnet sind, sowie mit den ihnen zugeordneten Empfangsoptiken von einer Ebene senkrecht zur Laufebene und parallel zu einer Radsatzachse in zwei Gruppen aufgeteilt werden, wobei die Strahlenbündel so verschwenkt sind, daß jedes Strahlenbündel der einen Gruppe zu jedem Strahlenbündel der anderen Gruppe divergierend verläuft. Hierdurch gelingt es, mit dem gleichen Meßprinzip und mit einer Einrichtung des gleichen prinzipiellen Aufbaus, wenn auch mit einer etwas umfangreicheren Rechnung, den Durchmesser eines Rades eines Radsatzes auch dann zu bestimmen, wenn nicht ein unterer Umfangsbereich von 180° eines Rades für ein Laser-Strahlenbündel zugänglich ist, sondern beispielsweise in Folge von Bremsklötzen nur 120° oder weniger zugänglich sind. Das Meßprinzip bleibt auch bei dieser Anordnung gleich. Die durchzuführende Berechnung zur Bestimung des Durchmessers wird allerdings etwas umfangreicher, weil das durchmesserabhängige Teilstück, das vom Rad zu durchlaufen ist, nun nicht mehr auf einer Durchmesserlinie liegt, sondern vielmehr Teil einer Sehne ist.

Es ist weiter nach der Erfindung vorgeschlagen, daß die genannte Ebene die Winkelhalbierende der divergierend verlaufenden Strahlenbündel bildet. Hierdurch kann die Rechnung vereinfacht werden, weil auf beiden Seiten mit gleichen Zahlenwerten gearbeitet werden kann. Außerdem wird hierdurch die Ausrichtung der Anlage erleichtert.

Ergänzend wird noch vorgeschlagen, daß die Strahlenbündel einer Gruppe parallel zueinander verlaufen. Auch dies erleichtert die Ausrichtung der Anlage und das Rechenprogramm.

Es wird weiterhin nach der Erfindung als vorteilhaft angesehen, daß die einlaufseitige Gruppe aus mindestens einem Strahlenbündel mit Empfangsoptik und die auslaufseitige Gruppe aus mindestens zwei Strahlenbündeln mit Empfangsoptik besteht. Insbesondere bei divergierend angeordneten Strahlenbündeln unterschiedlicher Gruppen gelingt es bereits mit dieser einfachen Konstellation die notwendigen Meßpunkte zu erfassen. Hierbei können die auslaufseitigen Strahlenbündel der Geschwindigkeitsmessung und - falls es mehr als zwei sind - der Beschleunigungserfassung dienen und es kann das erste einlaufseitige Strahlenbündel zusammen mit dem ersten auslaufseitigen Strahlenbündel der Zeiterfassung für das Durchlaufen des durchmesserabhängigen Weges dienen.

Es ist weiterhin nach der Erfindung vorgesehen, daß die vorhandenen Laser zur Erzeugung von Laser-Strahlenbündel gruppenweise oder insgesamt zu Sendemoduln zusammengesetzt sind. Hierdurch kann die Anlage baugruppenähnlich aufgebaut sein, und es kann die Meßfähigkeit der Anlage durch Austausch der Sendemodul verändert werden. Ein gleicher Aufbau kann natürlich auch für andere Einheiten zur Erzeugung elektromagnetischer Strahlenbündel durchgeführt werden.

Es ist weiterhin nach der Erfindung noch vorgeschlagen, daß mindestens jeder Laser für die Laserstrahlenbündel um eine Achse schwenkbar und feststellbar angeordnet ist. Hierdurch kann die Divergenz und die Parallelität der Laserstrahlenbündel untereinander einjustiert werden. Die Anlage kann damit zusätzlich auf unterschiedliche Freiraumbereiche am Rad, das zu vermessen ist, eingestellt werden.

Es ist weiterhin nach der Erfindung noch vorgesehen, daß Einrichtungen zum Teilen und Umlenken mindestens eines Strahlenbündels vorgesehen sind. Hierdurch gelingt es, z. B. mit einem einzigen Lasergerät mehrere, mindestens zwei, Laserstrahlenbündel zu erzeugen. Insbesondere bei senkrecht zur Laufebene und prallel zueinander verlaufenden Strahlenbündeln gelingt es, diese mit nur einem einzigen Lasergerät zu erzeugen.

Auch ist nach der Erfindung noch vorgesehen, daß jedes Strahlenbündel fokussiert wird, so daß die Taille des Strahlenbündels im Erwartungsbereich für die Berührung mit dem Rad liegt. Auf diese Art und Weise gelingt es, die geringfügige Restdivergenz des einzelnen Strahlenbündels so zu beeinflussen, daß in einem vorherbestimmbaren Bereich das Strahlenbündel eine engste Stelle, eine Taille aufweist. Dieser Bereich ist die günstigste Zone für den Kontakt mit der Umfangsfläche des Rades und es wird bei einer Berührung in diesem Bereich zwischen Strahlenbündel und Umfangsfläche des Rades die höchste Meßwiederholgenauigkeit erzielt.

Schließlich ist nach der Erfindung noch vorgesehen, daß mindestens die Einrichtung zur Erzeugung mindestens der Strahlenbündel und die zugehörigen Empfangsoptiken oder Empfänger auf einen verfahrbaren Meßwagen angeordnet sind, der mit einer Wegmeßeinrichtung zusammenarbeitet die ihrerseits über eine Verbindung mit der Auswerteeinrichtung verbunden sein kann oder verbindbar ist. Für die Durchmesserbestimmung kann nun auf die Bestimmung der Weg-Zeit-Funktion verzichtet werden und es genügt eine einfache Wegmessung zur Ermittlung des gesuchten Raddurchmessers.

Die Erfindung soll nun anhand verschiedener Prinzipskizzen näher erläutert werden.

Es zeigen:

Figur 1:     Ansicht in Richtung des Pfeils A nach Figur 5 oder in Richtung des Pfeils B nach Figur 4

Figur 2:     Schema der Abtastung

Figur 3:     Schema nach Figur 2, jedoch mit erweiterter Abtastung

Figur 4:     Prinzipskizze zur Zeiterfassung

Figur 5:     Schematischer Aufbau einer Meßeinrichtung

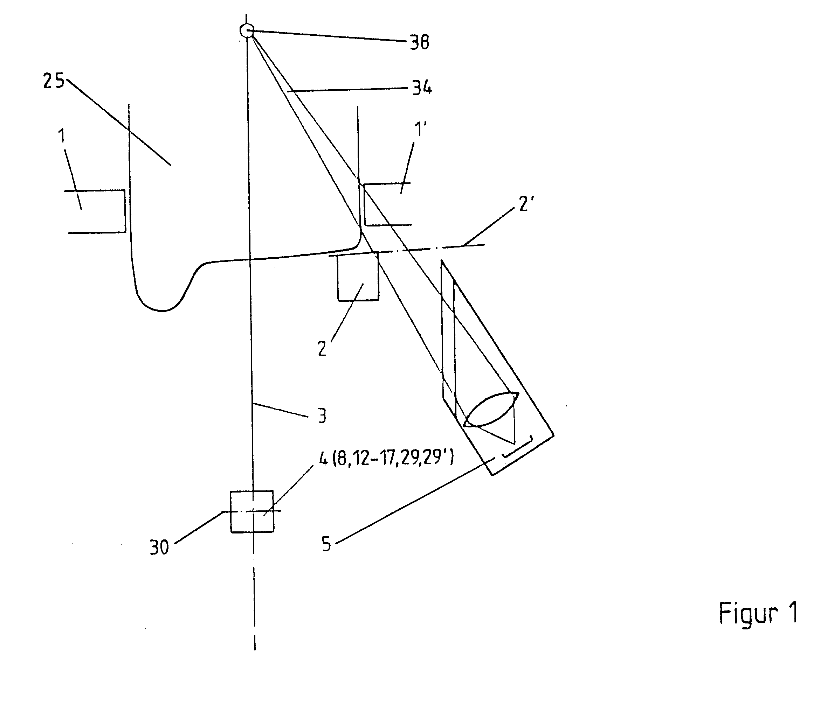

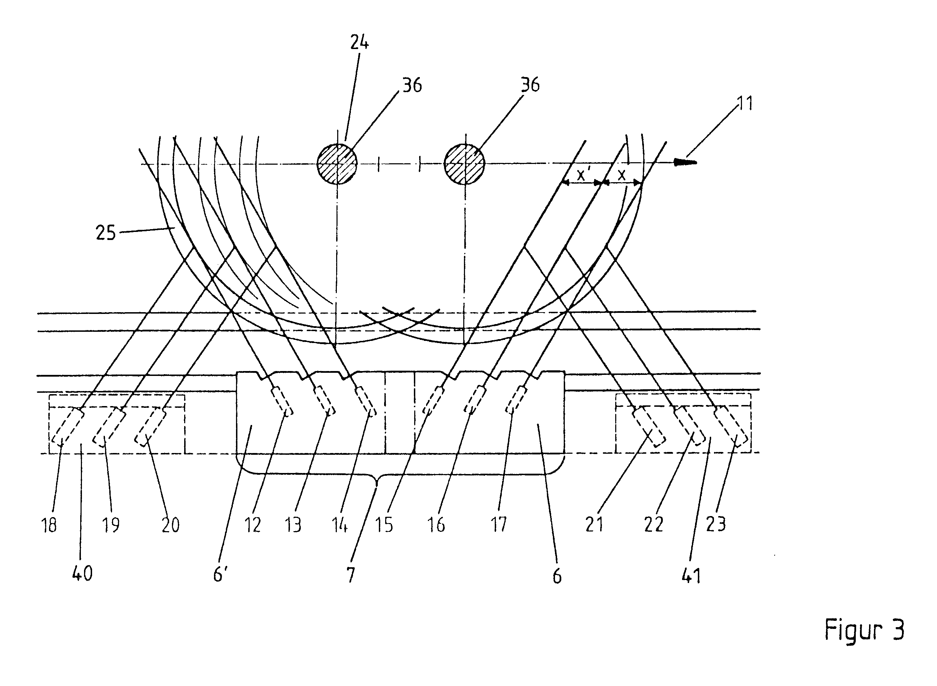

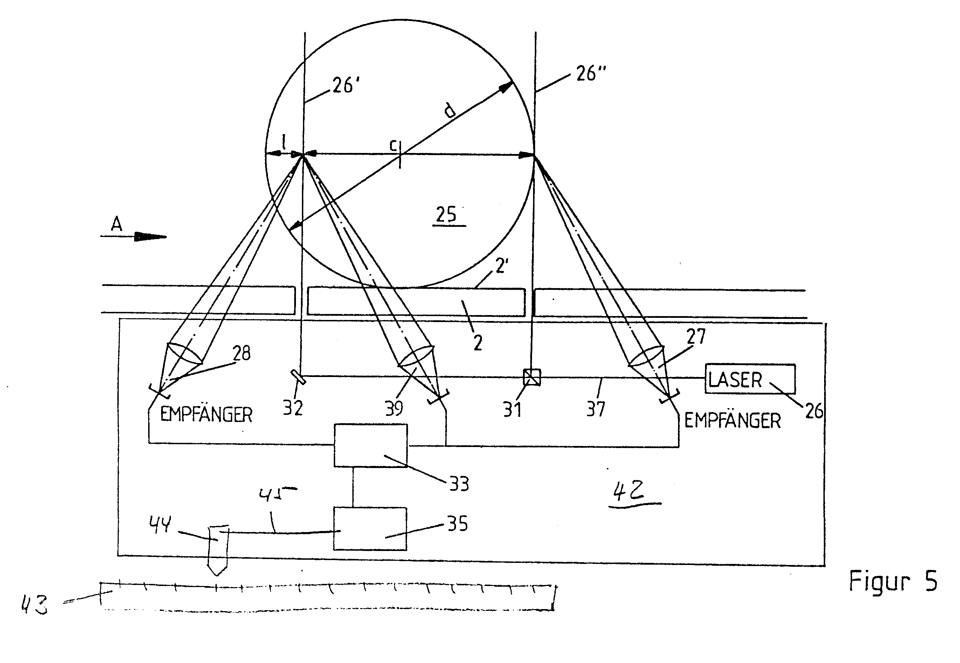

In Figur 5 ist eine einfache Anlage zur Ermittlung des Durchmessers d eines Rades 25 eines Eisenbahnradsatzes 24 (Figur 3) in ihrem schematischen Aufbau dargestellt. Auf einer Schiene 2, deren Oberkante eine Laufebene 2' bildet (siehe auch Figur 1), rollt ein Rad 25 eines Radsatzes 24 mit einer unbekannten Rollgeschwindigkeit in Richtung des Pfeils A nach Figur 5 ab. Wie der Figur 1 entnommen werden kann, wird dieses Rad 25 seitlich durch die Seitenführungen 1 und 1' auf der Schiene 2 geführt. Für die Durchführung der Messung ist es jedoch nicht von Bedeutung, ob das Rad rollt oder sich auf andere Weise in Richtung des Pfeils A bewegt.

Der Durchmesser der Lauffläche des Rades 25 soll in der Meßebene 3 (siehe Figur 1) ermittelt werden. Hierzu weist die Anlage nach Figur 5 ein unterhalb der Schiene 2 angeordnetes Lasergerät 26 auf, das ein Strahlenbündel 37 in der Ebene 3, jedoch parallel zum Verlauf der Schiene 2, aussendet. Das Strahlenbündel 37 wird an einer Teilungseinrichtung 31 geteilt, und es wird an dieser Stelle ein Teilstrahl um 90° nach oben umgelenkt, so daß ein Strahlenbündel 26'' in der Meßebene 3 nach oben gerichtet ist. Es steht dieses Strahlenbündel 26'' sozusagen als Lichtschranke in der Meßebene 3. Der andere Teil des Strahlenbündels 37 geht durch die Teilungseinrichtung 31 hindurch und trifft in einem Abstand C, der bekannt ist und z. B. kleiner als der erwartete Durchmesser d ist, auf den Umlenkspiegel 32. Dort wird er um 90° nach oben umgelenkt, so daß dort ein Strahlenbündel 26' nach oben und parallel zum Strahlenbündel 26'' und in der Meßebene 3 verläuft.

Unter der Annahme, daß das Rad 25 mit konstanter Geschwindigkeit V in Richtung des Pfeils A nach Figur 5 auf der Laufebene 2' abrollt, wird die vordere Seite des Rades mit ihrer Umfangsfläche in der Meßebene 3 zunächst den Strahl 26' tangieren. Der Tangierungspunkt liegt im Erwartungsbereich 38 und es wird von dort Licht des Strahlenbündels 26' diffus remittiert und von der Empfangsoptik 39 registriert. Die Empfangsoptik 39 gibt ein entsprechendes Signal an eine Zeiterfassungseinrichtung 33 und es wird dort eine Zeitmarke gesetzt. Dies kann bedeuten, daß entweder eine Zeitmeßeinrichtung in Gang gesetzt wird, oder aber, daß bei einer durchlaufenden Zeitmeßeinrichtung der Schaltzeitpunkt der Empfangsoptik 39 markiert, also z. B. abgespeichert wird.

Das Rad 25 rollt nun z. B. mit konstanter Geschwindigkeit V in Richtung des Pfeils A nach Figur 5 weiter und tangiert nach Durchlaufen der Strecke C, wenn diese kleiner als der Raddurchmesser d ist, das Laser-Strahlenbündel 26''. Auch dort tritt wieder im Berührungspunkt zwischen der Umfangsfläche des Rades 25 und dem Strahlenbündel 26'' diffus remittiertes Licht auf, das nun von der Empfangsoptik 27 registriert wird, die ebenfalls in der Zeiterfassungseinrichtung 33 eine Zeitmarke setzt. Über eine Auswerteinrichtung 35 kann nun der Zeitbedarf für das Durchlaufen der Distanz C ermittelt und hieraus die Geschwindigkeit V des Rades 25 in der Auswerteeinrichtung 35 ermittelt werden. Diese Geschwindigkeit wird nun ebenfalls abgespeichert.

Das Rad 25 bewegt sich nun weiter mit konstanter Geschwindigkeit V in Richtung des Pfeils A, so daß beide Strahlenbündel 26' und 26'' von der Umfangsfläche des Rades 25 unterbrochen werden. Diese Erscheinung tritt jedoch nur ein, wenn die Strecke C kleiner ist als der Raddurchmesser d. Nach Durchlaufen der durchmesserabhängigen Strecke 1 tangiert das Strahlenbündel 26' die Rückseite der Umfangsfläche des Rades 25 in der Meßebene 3 und es wird dort wiederum Licht diffus remittiert, das nun von der Empfangsoptik 28 registriert wird, die ihrerseits wiederum in der Zeiterfassungseinrichtung 33 ein Zeitsignal setzt. Da die Geschwindigkeit des Rades 25 aus der vorbeschriebenen Messung bekannt ist, kann nunmehr die Strecke 1, die ja durchmesserabhängig ist, dadurch bestimmt werden, daß die bekannte Geschwindigkeit mit der Zeit für das Durchlaufen der Strecke 1 multipliziert wird. Dies kann in der Auswerteinrichtung 35 geschehen. Eine Addition dieser Distanz 1 mit der Distanz C ergibt den Durchmesser d des Rades 25. Die genannten Berechnungen können von der Auswerteinrichtung 35 durchgeführt werden.

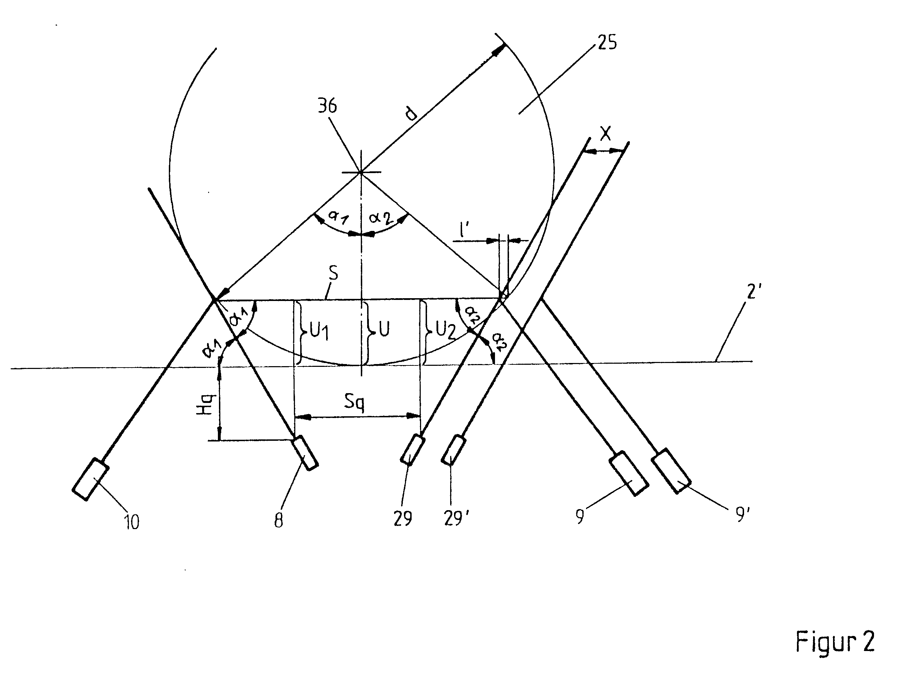

Die Anlage nach Figur 5 ist in ihrem prinzipiellen Aufbau ausreichend, um die Geschwindigkeit des Rades 25 und dessen Durchmesser zu bestimmen. Sie muß keineswegs ortsfest sein, sondern kann mindestens hinsichtlich der Bauelemente für die Strahlenbündel der Empfangsoptiken z. B. auf einem Meßwagen 42 angeordnet sein. Meßwagen 42 kann dann mittels eines nicht näher dargestellten Antriebs in Richtung des Pfeils A oder entgegengesetzt bewegt werden. Ist während einer solchen Bewegung des Meßwagens 42 der Radsatz z. B. ortsfest, so wird die gleiche Relativgeschwindigkeit erreicht und es kann somit das gleiche Meßergebnis ermittelt werden. Meßwagen 42 kann aber auch mit einer an sich bekannten Wegmeßeinrichtung 43, 44 zusammenarbeiten. Es muß dann nicht mehr die Geschwindigkeit des Meßwagens 42 sondern nur noch sein Verfahrweg ermittelt werden, wobei Anfang und Ende dieses Weges durch die Berührung der Strahlenbündel tangential am Radumfang bestimmt wird. Wenn eine Anordnung nach Figur 5 möglich ist, reicht bereits der Strahl 26' mit den Empfängern 28 und 39. Bei einer Bewegung in Richtung des Pfeils A registriert zunächst Empfänger 28 die Berührung, wodurch die Wegmeßeinrichtung 43,44 über die Auswerteeinrichtung 35 aktiviert werden kann. Ist der Durchmesser d des Rades 25 durchquert, wird dies vom Empfänger 39 registriert, der die Wegmessung stoppt. Der zurückgelegte Weg und damit der Durchmesser d kann nun in der Auswerteeinrichtung 35 errechnet werden. Müssen geneigte Strahlenbündel verwendet werden (z.B. Figur 2) so sind mindestens zwei notwendig, wie z. B. die Strahlenbündel 8 und 29 nach Figur 2.

Da es wünschenswert ist, möglichst exakt die Geschwindigkeit zu bestimmen, die das Rad 25 während des Durchlaufens der Strecke 1 aufweist, kann es sinnvoll sein, eine Geschwindigkeitsbestimmung möglichst nahe an diesem Bereich vorzunehmen. In einem solchen Fall ist es sinnvoll, ein drittes Strahlenbündel rechts vom Strahlenbündel 26'' und parallel zu diesem, anzuordnen. Es müßte dann die Empfangsoptik 39 auf den dort zu erwartenden Berührungspunkt dieses nicht dargestellten Strahlenbündels mit der Umfangsfläche des Rades 25 gerichtet werden. Der Abstand zwischen diesem dritten Strahlenbündel und dem Strahlenbündel 26'' könnte dann in der Größenordnung der durchmesserabhängigen Distanz 1 liegen. Diese Größenordnung ist bekannt, da der kleinste Durchmesser und der größte Durchmesser der Räder, die auf einer solchen Anlage vermessen werden sollen, bekannt ist. Es gelingt dann während des Durchlaufens der Strecke 1 gleichzeitig auch die in dieser Zeit bestehende Geschwindigkeit des Rades 25 zu bestimmen, so daß eine höhere Sicherheit und Genauigkeit bei der Errechnung der Strecke 1 erreicht wird. Insgesamt ist die Empfindlichkeit der verschiedenen Empfangsoptiken so auszulegen, daß von der jeweiligen Empfangsoptik der gesamte Erwartungsbereich 38, in dem ein Berührungspunkt zwischen der Umfangsfläche des Rades 25 und einem Strahlenbündel bei kleinstem und bei größtem zu messendem Rad auftritt, überdeckt wird. Gelingt dies nicht, muß der Meßbereich der Anlage in Abhängigkeit vom erfaßbaren Erwartungsbereich 38 eingeengt werden und es muß bei Über- oder Unterschreitung dieses Meßbereichs die jeweilige Empfangsoptik neu justiert werden. Natürlich ist es auch möglich mehrere Empfangsoptiken zur Erfassung jeweils unterschiedlicher Erwartungsbereiche vorzusehen. Bei der konstruktiven Ausführung einer solchen Meßeinrichtung muß selbstverständlich darauf geachtet werden, daß der von der Empfangsoptik zu erfassende Bereich frei ist von lichtundurchlässigen Hindernissen. In Figur 1 ist beispielsweise die Seitenführungsschiene 1' in diesem Bereich entweder auszusparen oder im notwendigen Umfang höher zu legen.

Die Figur 1 könnte eine Ansicht in Richtung des Pfeils A nach Figur 5 darstellen. Der in Figur 1 dargestellte Laser 4 ist um die Achse 30 schwenkbar und feststellbar angeordnet. Das vom Laser 4 ausgesandte Strahlenbündel liegt in der Meßebene 3. Es kann in der Darstellung nach Figur 1 der Laser 4 jedoch auch beispielsweise als Umlenkspiegel 32 (Figur 5) angesehen werden und man könnte dann die Darstellung nach Figur 1 auch betrachten als eine solche Darstellung, die sich ergibt, wenn in Figur 5 das Rad 25 um die Distanz 1 weiter in Richtung des Pfeiles A bewegt worden ist, so daß das Strahlenbündel 26' den Radumfang in der Meßebene 3 tangiert. Es wird dann Licht 34 diffus remittiert im Erwartungsbereich 38, das von der Empfangsoptik 5 registriert wird. Der weitere Ablauf ist dann wie bereits beschrieben.

In vielen Fällen ist ein apparativer Aufbau nach Figur 5 nicht anwendbar, weil die Räder des Radsatzes so eingebaut und beispielseise an der Umgangsfläche von Bremsklötzen abgedeckt sind, daß die Strahlenbündel das jeweilige Rad nicht mehr im Bereich des größten Durchmessers tangieren können. Aber auch unter diesen Bedingungen ist es möglich, mit gleichem Meßverfahren und prinzipiell gleichem Aufbau der Vorrichtung die gewünschte Messung durchzuführen.

Die sich ergebende prinzipielle Situation ist dargestellt in Figur 2. Da nur noch der untere Bereich der Umfangsfläche des Rades 25 von Laser-Strahlenbündeln tangiert werden kann, eine solche Tangierung aber für die Messung notwendig ist, sind die Laser-Strahlenbündel entsprechend geneigt angeordnet, so wie in Figur 2 dargestellt. Hierbei ist jedem Laser-Strahlenbündel ein eigener Laser zugeordnet, so daß die Strahlenbündel über das jeweilige Lasergerät identifiziert werden. Nach Figur 2 sind für die Durchführung der Messung Lasergeräte 8 einerseits, sowie Lasergeräte 29 und 29' andererseits vorgesehen. Eine nicht näher dargestellte Ebene senkrecht zur Zeichenebene der Figur 2, die nach Figur 2 durch die Radsatzachse 36 verlaufen kann und parallel zu dieser liegt, teilt die Lasergeräte in zwei Gruppen. Hierbei besteht die links dieser Ebene angeordnete Gruppe aus im Ausführungsbeispiel nur einem Laser 8 und die rechts der genannten Ebene angeordnete Gruppe aus zwei Lasergeräten 29 und 29'. Die genannten Lasergeräte sind geneigt, so daß die Strahlenbündel unterschiedlicher Gruppen divergieren, während die Strahlenbündel gleicher Gruppen parallel zueinander verlaufen, wie an den Lasergeräten 29 und 29' erkennbar ist. Die Neigung der Laser 8 und 29 sowie 29' ist hierbei so bemessen, daß die Strahlenbündel das jeweilige Rad 25 tatsächlich tangieren können, ohne von irgendwelchen Bauteilen behindert zu werden. Hierbei ist es nicht erforderlich, daß der Winkel, der zwischen der genannten, senkrecht zur Zeichenebene stehenden und durch die Radsatzachse 36 verlaufenden Ebene und dem Strahlenbündel 8 einerseits und dem Strahlenbündel 29 bzw. 29' andererseits betragsmäßig gleich groß ist.

Auch bei einer Einrichtung nach Figur 2 wird das Rad 25 in der zu Figur 5 bereits beschriebenen Weise von links nach rechts durch die Einrichtung hindurchgerollt, so daß zunächst das Strahlenbündel 8 die Umfangsfläche des Rades 25 in der Meßebene 3 tangiert. Dem Strahlenbündel 8 ist eine Empfangsoptik 10 zugeordnet, die in der bereits zu Figur 5 und Figur 1 beschriebenen Weise arbeitet. Der beschriebene Berührungspunkt des Strahlenbündels 8 mit dem Rad 25, das von links nach rechts sozusagen gegen das Strahlenbündel 8 anläuft, ist von der Empfangsoptik 10 nicht erfaßbar, so daß Empfangsoptik 10 nicht

reagiert. Das Rad 25 rollt in der beschriebenen Richtung weiter und tangiert nun das Strahlenbündel 29, wobei das hierbei diffus remittierte Licht von der Empfangsoptik 9 registiert wird, so daß hiervon in der bereits beschriebenen Weise eine Zeitmarke gesetzt wird. Der Radsatz rollt weiter, so daß das Rad 25 als nächstes auf seiner Rückseite wiederum vom Strahlenbündel 8 tangiert wird, wobei das von diesem Berührungspunkt diffus remittierte Licht nunmehr von der Empfangsoptik 10 erfaßt werden kann. Das Rad 25 hat nun zwischen den beiden zuletzt genannten Berührungszeitpunkten die durchmesserabhängige Strecke 1' zurückgelegt. Der Zeitbedarf für das Durchlaufen der durchmesserabhängigen Strecke 1' kann wiederum von der Auswerteeinrichtung 35 ermittelt werden. Unbekannt ist jetzt jedoch noch bei einer Anordnung nach Figur 2 die Geschwindigkeit des Rades 25. Diese kann jedoch von der Anlage nach Figur 2 ebenfalls sehr schnell ermittelt werden. Während sich das Rad 25 nämlich in der bereits beschriebenen Weise auf der Laufebene 2' durch die Anlage hindurchbewegt, wird von der Umfangsfläche des Rades nunmehr auch das Strahlenbündel 29' tangiert und es wird das an der Berührungsstelle diffus remittierte Licht von der Empfangsoptik 9' registriert, die ihrerseits wiederum eine Zeitmarke setzt. Da der Abstand X zwischen den Strahlenbündeln 29 und 29' bekannt ist, kann aus diesem Abstand und der Zeitdifferenz zwischen den Zeitmarken der Empfangsoptik 9 und 9' die Geschwindigkeit des Rades 25 errechnet werden. Dann aber ist es auch in der bereits zu Figur 5 beschriebenen Weise möglich, die Strecke 1' zu berechnen. Es ist dann weiter unter Berücksichtigung der konkreten Abmessungen der Anlage, also unter Berücksichtigung der Einbauhöhe $H_q$ und des Abstandes $S_q$ der Laser 8 und 29 und bei Berücksichtigung des Winkels $\alpha_1$ und $\alpha_2$ der Durchmesser d zu errechnen. Hierbei ist zu beachten, daß bei unterschiedlichen Winkeln $\alpha_1$ und $\alpha_2$ auch unterschiedliche Höhen U, also U1 und U2, für die Linie S entstehen.

Setzt man voraus, daß die Geschwindigkeit V des Rades 25 und der Zeitbedarf für das Durchlaufen der durchmesserabhängigen Strecke 1' vorab ermittelt wurden und somit bekannt sind, und auch die körperlichen Dimensionen für $H_q$ und $S_q$ sowie für $\alpha_1$ und $\alpha_2$ bekannt sind, dann läßt sich der Durchmesser d z. B. nach folgender Gleichung berechnen:

$$d = 2 \cdot \frac{V \cdot t + Hq \left( \dfrac{1}{\tan \alpha_1} + \dfrac{1}{\tan \alpha_2} \right) + Sq}{\sin \alpha_1 + \sin \alpha_2 - (1 - \cos \alpha_1) \cdot \dfrac{1}{\tan \alpha_1} - (1 - \cos \alpha_2) \cdot \dfrac{1}{\tan \alpha_2}}$$

Diese Gleichung läßt sich noch vereinfachen, wenn dafür gesorgt wird, daß $\alpha_1$ und $\alpha_2$ exakt gleich sind.

In Figur 3 ist eine Anordnung dargestellt, die prinzipiell aufgebaut ist wie Figur 2. Zur Verbesserung der Meßgenauigkeit und zur einfachen Erfaßung eines Beschleunigungsanteils der Bewegung des Rades 25 sind dort jedoch mehrere Laser 12 bis 14 einerseits und 15 bis 17 andererseits vorgesehen, wobei die Laser 12 - 14 in der zu Figur 2 bereits beschriebenen Weise bezüglich der Laser 15 - 17 divergierend angeordnet sind, wobei jedoch die Laser 12 - 14 einerseits und die Laser 15 - 17 andererseits untereinander parallel zueinander verlaufen. Nach Figur 3 sind den Lasern 12 - 14 die Empfangsoptiken 18 - 20 und den Lasern 15 - 17 die Empfangsoptiken 21 - 23 zugeordnet. In der Anlage nach Figur 3 können die Laser 12 - 14 zu einem Sendemodul 6' und die Laser 15 - 17 zu einem Sendemodul 6 zusammengefaßt sein. Sie können in dieser Zusammenfassung eine Baueinheit bilden, die austauschbar ist. Es ist auch möglich, die Laser 12 - 17 zu einem Sendemodul 7 zusammenzufassen, das ebenfalls als Ganzes austauschbar gestaltet sein kann. Innerhalb der Sendemoduln 6, 6' oder 7 können selbstverständlich die Laser 12 - 17 in der zu Figur 1 bereits beschriebenen Weise um eine Achse, die der Achse 30 nach Figur 1 vergleichbar ist, schwenkbar und feststellbar angeordnet sein. Es ist ebenfalls möglich, die Empfangsoptiken 18 - 20 einerseits und 21 - 23 andererseits zu Empfangsmoduln 40 bzw. 41 zusammenzufassen. Hierbei kann es auch sinnvoll sein, daß auch die Empfangsoptiken um eine geeignete Achse schwenkbar und feststellbar angeordnet sind, so daß sie auf einen gewünschten Erwartungsbereich 38 eingerichtet werden können, sofern man hierzu nicht mehrere Optiken verwenden will.

In Figur 3 bewegt sich der Radsatz, symbolisiert durch die Radsatzachse 36, mit dem in Figur 3 sichtbaren Rad 25 in Richtung des Pfeils 11 durch die Meßeinrichtung. Hierbei wird die Umfangsfläche des Rades 25 in der zu Figur 2 hinsichtlich des Strahlenbündels 8 bereits beschriebenen Weise zunächst von den Strahlenbündeln 12, 13 und 14 in der beschriebenen Reihenfolge tangiert, wobei jedoch die zugeordneten Empfangsoptiken 18, 19 und 20 den dabei entstehenden Berührungspunkt nicht erfassen können. Beim weiteren Durchgang durch die Einrichtung nach Figur 3 wird nun zunächst das Strahlenbündel 15 tangiert und es wird der entsprechende Berührungspunkt von der Empfangsoptik 21 erfaßt, die in der bereits beschriebenen Weise hierbei eine Zeitmarkierung setzt. Die weiteren Berührungspunkte mit den Strahlenbündeln 16 und 17 werden von den Empfangsoptiken 22 und 23 erfaßt, die ihrerseits ebenfalls jeweils Zeitmarkierungen setzen und es kann somit mit Hilfe der Zeitdifferenz zwischen der Zeitmarkierung der Empfangsoptik 21 und 22 einerseits und 22 und 23 andererseits jeweils eine Geschwindigkeit und bei Bedarf aus den Geschwindigkeitsunterschieden auch eine Beschleunigung errechnet werden, weil ja die zugehörigen Teilstrecken X und X' bekannt sind.

Auf der anderen Seite des Rades 25 wird, kurz nachdem der Berührungspunkt mit dem Strahlenbündel 15 passiert ist, das Strahlenbündel 12 die Umfangsfläche des Rades 25 in der Meßebene 3 tangieren und es wird der entsprechende Berührungspunkt von der Empfangsoptik 18 registriert, die eine Zeitmarke setzt. Die Zeitdifferenz zwischen der von der Empfangsoptik 21 und der Empfangsoptik 18 markierten Zeitpunkte ermöglicht mit der ermittelten oder noch zu ermittelnden Geschwindigkeit oder Beschleunigung des Rades 25 die Errechnung der durchmesserabhängigen Strecke, die in Figur 2 mit 1' bezeichnet wurde. Dieser Vorgang wiederholt sich bezüglich der Strahlenbündel 13 und 14 und den zugeordneten Empfangsoptiken 19 und 20. Diese Mehrfachmessung ermöglicht eine Ermittlung der Geschwindigkeit und der Beschleunigung und ergibt eine höhere Sicherheit und Genauigkeit der Berechnung. Geschwindigkeit und Beschleunigung des Rades 25 können darüber hinaus noch einmal überprüft werden, durch deren Berechnung über die ja ebenfalls bekannten Abstände zwischen den Laser-Strahlenbündeln 12, 13 und 14. Auch in diesem Bereich wird ja von den Empfangsoptiken 18, 19 und 20 jeweils eine Zeitmarke gesetzt, so daß auch hier noch einmal eine Geschwindigkeits- bzw. Beschleunigungsberechnung durchgeführt werden kann. Außerdem können hierdurch Fehlmessungen durch Fehlstellen (wie z. B. Flachstellen), die sich zufällig am Berührungspunkt des Lasers mit dem Rad oder an dessen Aufstandspunkt befinden, vermieden werden.

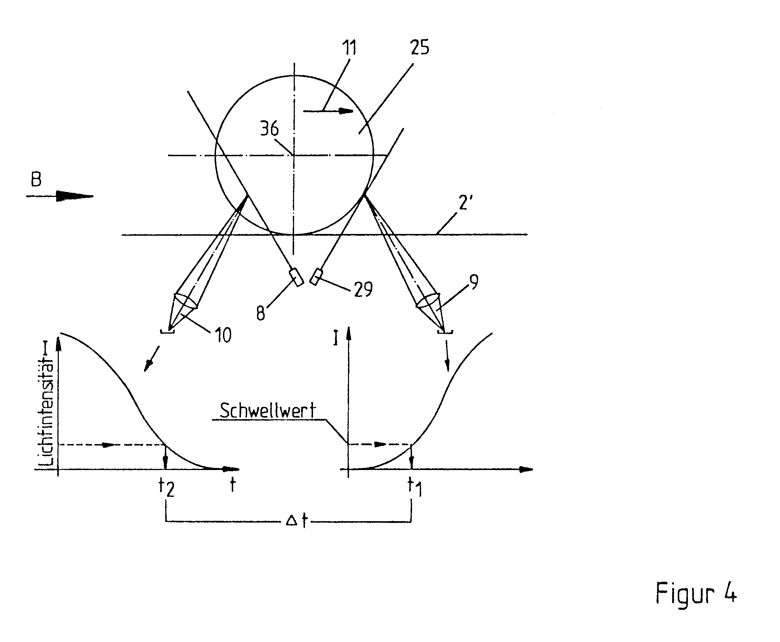

In Figur 4 ist in einer prinzipiellen Anordnung, die sich auf zwei divergierend verlaufende Laser 8 und 29 (wie in Figur 2) beschränkt, das Schaltprinzip für die Empfangsoptiken 9 und 10 dargestellt. Es ist zu erkennen, daß bei einem bestimmten Schwellwert der von den Empfangsoptiken 9 und 10 registrierten Lichtintensität des diffus remittierten Lichtes 34 (Figur 1) die Empfangsoptik schaltet. Es wird nach Figur 2 von der Empfangsoptik 9 die Zeitmarke t1 und von der Empfangsoptik 10 die Zeitmarke t2 gesetzt. Die zwischen beiden Zeitmarken liegende Zeit Δt ist die Zeit, die verbraucht wurde, um die Durchmesserabhängige Strecke 1' zurückzulegen.

Durch eine spezielle, jedoch ansich bekannte Optik wird jedes Laser-Strahlenbündel so geformt, daß es im Erwartungsfeld eine möglichst schmale Taille bezitzt. Hierdurch wird die Meßgenauigkeit und die Wiederholgenauigkeit verbessert.

Um an den Empfangsoptiken Störeinflüsse zu minimieren, wird die Lichtquelle entweder schnell gepulst oder moduliert betrieben, wobei die Frequenz dabei auf die erwartete Vorschubgeschwindigkeit des jeweiligen Rades abgestimmt ist.

Sinnvoll ist es auch, die Ausgangsleistung der Lichtquelle beispielsweise durch einen Monitordetektor zu überwachen. Es sollte hierbei ein weiterer Monitordetektor eine Verschmutzung der Optik der Empfangsoptiken ermitteln, beispielsweise durch Erfassung des erhöhten Rückstreuanteils des Sendelichtes.

Wegen des doch recht rauhen Betriebes solcher Anlagen, ist es besonders vorteilhaft, die gesamte Sendeeinheit staub- und wasserdicht zu kapseln. Hierbei wird sinnvollerweise das Ausgangsfenster der Sendeeinheit zusätzlich durch Schutzklappen und/oder Pressluftabstrahlung vor dem Verschmutzen geschützt.

Die Empfangsoptiken, die das remittierte Licht empfangen, können im Prinzip im gesamten Halbraum vor der Radoberfläche angebracht werden, vorzugsweise jedoch dort, wo sie am wenigsten einer Beschädigung ausgesetzt sind und trotzdem maximales Signal bekommen. Jeder Empfänger weist hierbei ein Schutzfenster auf, welches gegen Verschmutzung durch einen Luftvorhang und gegen Feuchtigkeit und Beschlagen durch Wischer und/oder Heizsysteme geschützt ist. Im Empfänger bildet eine Abbildungsoptik das Erwartungsfeld auf einem fotoempfindlichen Detektor ab, der dann das einfallende Licht, wie zu Figur 4 beschrieben, in ein elektrisches Signal umwandelt. Hierbei kann ein zusätzlicher Lichtfilter, der auf das Senderlicht abgestimmt ist, der Signalverbesserung dienen.

Liste der verwendeten Bezugszeichen

| 1 | Seitenführung |
|---|---|
| 1' | Seitenführung |
| 2 | Schiene |
| 2' | Laufebene |
| 3 | Meßebene |

| 4 | Laser |
|---|---|
| 5 | Empfangsoptik |
| 6 | Sendemodul |
| 6' | Sendemodul |
| 7 | Sendemodul |
| 8 | Laser |
| 9 | Empfangsoptik |
| 9' | Empfangsoptik |
| 10 | Empfangsoptik |
| 11 | Pfeil Rollrichtung |
| 12 - 17 | Laser |
| 18 - 23 | Empfangsoptik |
| 24 | Radsatz |
| 25 | Rad |
| 26 | Laser |
| 26' | Laser |
| 26'' | Laser |
| 27 | Empfangsoptik |
| 28 | Empfangsoptik |
| 29 | Laser |
| 29' | Laser |
| 30 | Achse |
| 31 | Teilungseinrichtung |
| 32 | Umlenkspiel |
| 33 | Zeiterfassungseinrichtung |
| 34 | diffus remittiertes Licht |
| 35 | Auswerteeinrichtung |
| 36 | Radsatzachse |
| 37 | Strahlenbündel |
| 38 | Erwartungsbereich |
| 39 | Empfangsoptik |
| 40 | Empfangsmodul |
| 41 | Empfangsmodul |
| 42 | Meßwagen |
| 43 | Wegmeßeinrichtung |
| 44 | Wegmeßeinrichtung |
| 45 | Verbindung |
| A | Pfeil |
| B | Pfeil |
| C | Grundabstand |
| d | Durchmesser |
| l | durchmesserabhängige Distanz |
| l' | durchmesserabhängige Distanz |
| S | Sehnenstück |
| X | Abstand |

**Patentansprüche**

1. Verfahren zur Durchmesserbestimmung der Räder (25) von Radsätzen (24) von Schienenfahrzeugen, dadurch gekennzeichnet, daß ein Radsatz (24) mit zu vermessenden Rädern (25) relativ und parallel zu einer beliebigen, als Bezugsebene (2') dienenden, tangential zu den Rädern verlaufenden Ebene bewegt und die Geschwindigkeit der Bewegung bestimmt wird, daß der Zeitbedarf gemessen wird, den ein in der Ebene (3) des zu messenden Durchmessers (d) liegendes Teilstück (l) eines zu vermessenden Rades für das Durchlaufen einer definierten Wegstrecke benötigt, wobei die Länge des Teilstückes (l) in bestimmter, durch eine Funktion gegebener Weise vom Raddurchmesser (d) abhängt, und daß aus der Geschwindigkeit, dem Zeitbedarf und den Kenndaten der definierten Wegstrecke (C, $H_q$, $S_q$, $\alpha_1$, $\alpha_2$) die Länge des Teilstückes (l) und daraus unter Verwendung der Funktion der Durchmesser (d) des Rades (25) berechnet wird.

**2.** Verfahren nach Anspruch 1, dadurch gekennzeichnet, daß zur Bestimmung der Beschleunigung die Geschwindigkeit mehrfach hintereinander gemessen wird.

**3.** Verfahren nach Anspruch 2, dadurch gekennzeichnet, daß mehrfach hintereinander der Zeitbedarf gemessen wird, den Teilstücke (l) des zu vermessenden Rades (25) für das Durchlaufen definierter Wegstrecken benötigen, wobei die Länge der Teilstücke (l) in bestimmter, durch eine Funktion gegebener Weise vom Raddurchmesser (d) abhängt; und daß aus der Geschwindigkeit, Beschleunigung, dem jeweils ermittelten Zeitbedarf und den Kenndaten der definierten Wegstrecken (C, $H_q$, $S_q$, $\alpha_1$, $\alpha_2$) die Längen der jeweiligen Teilstücke (l) und daraus unter Verwendung der Funktion der Durchmesser (d) des Rades (25) berechnet wird.

**4.** Verfahren nach einem der Ansprüche 1 bis 3, dadurch gekennzeichnet, daß die Räder (25) eines Radsatzes (24) auf je einer Schiene (2) abgerollt werden, wobei die Schienen eine Laufebene bilden, die mit der Bezugsebene (2') identisch ist.

**5.** Verfahren zur Durchmesserbestimmung der Räder von Radsätzen von Schienenfahrzeugen, dadurch gekennzeichnet, daß ein eine Mittelachse aufweisendes elektromagnetisches Strahlenbündel (26'), das in der Ebene des zu messenden Durchmessers (d) verläuft, in dieser Ebene senkrecht zur Mittelachse des Strahlenbündels (26') bezüglich des Rades (25) verschoben wird, so lange, bis das Strahlenbündel die Umfangsfläche des Rades (25) zweimal tangierend berührt hat, daß weiter die bei tangentialer Berührung von der Radumfangsfläche remittierte Strahlung erfaßt wird und der zwischen den beiden Berührungspunkten liegende, vom Strahlenbündel (26') zurückgelegte Weg, der dem Raddurchmesser entspricht, ermittelt wird.

**6.** Einrichtung zur Durchmesserbestimmung der Räder von Radsätzen von Schienenfahrzeugen, dadurch gekennzeichnet, daß für einen Radsatz (24) eine Trageinrichtung vorgesehen ist, sowie eine Einrichtung mit mindestens zwei abstrahlenden, je eine Mittelachse aufweisenden, elektromagnetischen Strahlenbündeln (26',26''), die mindestens angenähert in der Ebene (3) des zu messenden Durchmessers (d) verlaufen und die in dieser Ebene einen Grundabstand (C) zueinander aufweisen und in dieser Ebene und senkrecht zu ihrer Mittelachse relativ zum Radsatz unter Beibehaltung ihres Grundabstandes bewegbar angeordnet sind, sowie mindestens einer oder einem jedem Strahlenbündel (26',26'') zugeordneten Empfangsoptik oder Empfänger (27,28) zur Erfassung von bei tangentialer Berührung der Radumfangsfläche mit dem Strahlenbündel remittierter Strahlung (34), wobei die Empfangsoptiken oder Empfänger (27,28) mit einer Zeiterfassungs- (33) und einer Auswerteeinrichtung (35) verbunden sind und wobei die Strahlen eine Wellenlänge von 200 - 2000 nm aufweisen.

**7.** Einrichtung nach Anspruch 6, dadurch gekennzeichnet, daß die Trageinrichtung für jedes Rad (25) eines Radsatzes eine Schiene aufweist, wobei die Schienen eine Laufebene (2') bilden und daß die elektromagnetischen Strahlenbündel Laser-Strahlenbündeln (26',26'') sind.

**8.** Einrichtung nach Anspruch 6 oder 7, dadurch gekennzeichnet, daß die genannten Laser-Strahlenbündel und die zugeordneten Empfangsoptiken mehrfach, jeweils um einen Streckenbetrag versetzt zueinander, vorgesehen sind.

**9.** Einrichtung nach Anspruch 8, dadurch gekennzeichnet, daß der Versatz kleiner ist, als der Grundabstand (c).

**10.** Einrichtung nach einem der Ansprüche 7 bis 9, dadurch gekennzeichnet, daß die vorhandenen Strahlenbündel (8,29,29',12-17) frei gewählte Abstände $S_q$ und X untereinander aufweisen, die kleiner sind als der kleinste zu messende Durchmesser und in einem frei gewählten Abstand Hq zur Laufebene (2') angeordnet sind, sowie mit den ihnen zugeordneten Empfangsoptiken (10,9,9', 18-23) von einer Ebene senkrecht zur Laufebene (2') und parallel zu einer Radsatzachse (36) in zwei Gruppen aufgeteilt werden, wobei die Strahlenbündel so verschwenkt sind, daß jedes Strahlenbündel (8;12-14) der einen Gruppe zu jedem Strahlenbündel (29,29'; 15-17) der anderen Gruppe divergierend verläuft.

**11.** Einrichtung nach Anspruch 10, dadurch gekennzeichnet, daß die genannte Ebene die Winkelhalbierende der divergierend verlaufenden Strahlenbündel bildet.

**12.** Einrichtung nach einem der Ansprüche 10 oder 11, dadurch gekennzeichnet, daß die Strahlenbündel (12-14; 15-17; 29,29') einer Gruppe parallel zueinander verlaufen.

**13.** Einrichtung nach einem der Ansprüche 10 bis 12, dadurch gekennzeichnet, daß die einlaufseitige Gruppe aus mindestens einem Strahlenbündel (8) mit Empfangsoptik (10) und die auslaufseitige Gruppe aus mindestens zwei Strahlenbündeln (29,29') mit Empfangsoptiken (9,9') besteht.

**14.** Einrichtung nach einem der Ansprüche 7 bis 13, dadurch gekennzeichnet, daß die vorhandenen Laser zur Erzeugung von Laser-Strahlenbündel gruppenweise (6,6') oder insgesamt (7) zu Sendemodulen (6,6'; 7) zusammengesetzt sind.

**15.** Einrichtung nach einem der Ansprüche 7 bis 14, dadurch gekennzeichnet, daß jeder Laser für die Laser-Strahlenbündel (4,8,12-17, 29,29') um eine Achse (30) schwenkbar und feststellbar angeordnet ist.

**16.** Einrichtung nach Anspruch 6, dadurch gekennzeichnet, daß Einrichtungen zum Teilen (31) und Umlenken (32) mindestens eines Strahlenbündels (37) vorgesehen sind.

**17.** Einrichtung nach einem der Ansprüche 6 bis 16, dadurch gekennzeichnet, daß jedes Strahlenbündel fokussiert wird, so daß die Taille des Strahlenbündels im Erwartungsbereich (38) für die Berührung mit dem Rad (25) liegt.

**18.** Einrichtung nach einem der Ansprüche 6 bis 17, dadurch gekennzeichnet, daß die Einrichtungen zur Erzeugung der Strahlenbündel (26',26'') und die zugehörigen Empfangsoptiken oder Empfänger (27,28) auf einem verfahrbaren Meßwagen (42) angeordnet sind, der mit einer Wegmeßeinrichtung (43,44) zusammenarbeitet, die ihrerseits über eine Verbindung (45) mit der Auswerteeinrichtung (35) verbunden sein kann oder verbindbar ist.

**Claims**

**1.** Method for determining the diameter of the wheels (25) of wheelsets (24) of railed vehicles, characterised in that a wheelset (24) having wheels (25) to be measured moves relative to and parallel to any plane extending tangentially to the wheels and serving as a reference plane (2') and the velocity of the movement is determined, and in that one measures the time period needed for a portion (l) of a wheel to be measured lying in the plane (3) of the diameter (d) to be measured to traverse a defined path length, in which the length of the portion (l) depends upon the wheel diameter (d) in a fixed manner given by a function, and in that from the velocity, the time period and the characteristic data of the defined path length (C, $H_q$, $S_q$, $\alpha_1$, $\alpha_2$) the length of the portion (l) is calculated, and from that, using the function, is calculated the diameter (d) of the wheel (25).

**2.** Method according to claim 1, characterised in that the velocity is measured a number of times in succession in order to determine the acceleration.

**3.** Method according to claim 2, characterised in that the time period required for the portion (l) of the wheel (25) to be measured to pass through the defined path length is measured a number of times in succession, with the length of the portion (l) depending upon the wheel diameter (d) in a fixed manner given by a function; and in that from the velocity, acceleration, the particular determined time period and the characteristic data of the defined path length (C, $H_q$, $S_q$, $\alpha_1$, $\alpha_2$) the length of the particular portion (l) is calculated and therefrom is calculated the diameter (d) of the wheel (25) using the function.

**4.** Method according to one of claims 1 to 3, characterised in that the wheels (25) of a wheelset (24) are each arranged to roll on a rail (2), with the rails forming a rolling plane which is identical with the reference plane (2').

**5.** Method of determining the diameter of the wheels of wheelsets of railed vehicles, characterised in that an electromagnetic radiation beam (26') having a central axis and which extends in the plane of the diameter (d) to be measured is displaced relative to the wheel (25) in this plane perpendicular to the central axis of the radiation beam (26') until the radiation beam has twice tangentially made contact with the peripheral surface of the wheel (25), and in that additionally the radiation reflected from the circumferential surface of the wheel upon tangential contact is detected and the distance traversed by the radiation beam (26') between the two contact points and which corresponds to the wheel diameter is determined.

6. Apparatus for determining the diameter of the wheels of wheelsets of railed vehicles, characterised in that a support device is provided for a wheelset (24), as well as a device having at least two radiating electromagnetic radiation beams (26', 26'') which each have a central axis and which extend at least approximately in the plane (3) of the diameter (d) to be measured and which have in this plane a basic spacing (C) from each other and which are arranged to be movable in this plane and perpendicular to their central axes relative to the wheelset while maintaining their basic spacing, as well as receiving optical means or receivers (27, 28) associated with at least one or with each radiation beam (26', 26'') for detecting radiation (34) reflected upon tangential contact of the circumferential surface of the wheel by the radiation beam, wherein the receiving optical means or receivers (27, 28) are connected to a time-detecting device (33) and an evaluation device (35) and wherein the beams have a wavelength of 200 - 2000 nm.

7. Apparatus according to claim 6, characterised in that the support device for each wheel (25) of a wheelset comprises a rail, and wherein the rails form a rolling plane (2') and the electromagnetic radiation beams are laser beams (26', 26'').

8. Apparatus according to claim 6 or 7, characterised in that the said laser beams and the associated receiving optical means are provided as a plurality of units respectively offset relative to one another by a given distance.

9. Apparatus according to claim 8, characterised in that the offset is smaller than the basic spacing (C).

10. Apparatus according to one of claims 7 to 9, characterised in that the radiation beams (8, 29, 29', 12 - 17) which are provided are at freely chosen spacings ($S_7$) from one another which are smaller than the smallest diameter to be measured and are arranged at a freely chosen distance Hq from the rolling plane (2'), and wherein the receiving optical means (10, 9, 9', 18 - 23) associated therewith are divided into two groups by a plane perpendicular to the rolling plane (2') and parallel to a wheelset axis (36), and wherein the radiation beams are so pivoted that each radiation beam (8; 12 - 14) of the one group extends divergently relative to each radiation beam (29, 29'; 15 - 17) of the other group.

11. Apparatus according to claim 10, characterised in that the said plane bisects the divergently extending radiation beams.

12. Apparatus according to one of claims 10 or 11, characterized in that the radiation beams (12 - 14; 15 - 17; 29, 29') of one group extend parallel to each other.

13. Apparatus according to one of claims 10 to 12, characterised in that the input-side group consists of at least one radiation beam (8) with receiving optics (10) and the output-side group consists of at least two radiation beams (29, 29') with receiving optics (9, 9').

14. Apparatus according to one of claims 7 to 13, characterised in that the lasers provided for the production of laser radiation beams are combined in groups (6, 6') or in total (7) into transmitter modules (6, 6'; 7).

15. Apparatus according to one of claims 7 to 14, characterised in that each laser for the laser radiation beams (4, 8, 12 - 17, 29, 29') is pivotable and adjustable about an axis (30).

16. Apparatus according to claim 6, characterised in that devices are provided for splitting (31) and redirecting (32) at least one radiation beam (37).

17. Apparatus according to one of claims 6 to 16, characterised in that each radiation beam is focused so that the waist of the radiation beam lies in the anticipated zone (38) for the contact with the wheel (25).

**EP 0 208 060 B1**

**18.** Apparatus according to one of claims 6 to 17, characterised in that the devices for producing the radiation beams (26', 26'') and the associated receiving optical means or receivers (27, 28) are arranged on a displaceable measuring carriage (42) which cooperates with a displacement measuring device (43, 44) which for its part is connected to or is connectable to the evaluation device (35) by means of a connection means (45).

## Revendications

**1.** Procédé pour la détermination du diamètre des roues (25) de jeux de roues (24) de véhicules sur rails, caractérisé en ce que l'on déplace, relativement et parallèlement à un plan quelconque servant de plan de référence (2') et s'étendant tangentiellement par rapport aux roues, un jeu de roues (24) comportant des roues (25) à mesurer, et on détermine la vitesse du déplacement, en ce que l'on mesure le temps nécessaire à une partie (l) d'une roue à mesurer située dans le plan (3) du diamètre (d) à mesurer, pour parcourir une distance définie, la longueur de la partie (l) dépendant d'une manière déterminée, définie par une fonction, du diamètre (d) des roues, et en ce que l'on calcule, à partir de la vitesse, du temps et des données caractéristiques assignées de la distance définie (C, $H_q$, $S_q$, $\alpha_1$, $\alpha_2$), la longueur de la partie (l) et, à partir de celle-ci, en utilisant ladite fonction, le diamètre (d) de la roue (25).

**2.** Procédé selon la revendication 1, caractérisé en ce que, pour déterminer l'accélération, on mesure la vitesse à plusieurs reprises.

**3.** Procédé selon la revendication 2, caractérisé en ce que l'on mesure à plusieurs reprises le temps nécessaire à des parties (l) de la roue (25) à mesurer pour parcourir des distances définies, la longueur des parties (l) dépendant d'une manière déterminée, définie par une fonction, du diamètre (d) des roues, et en ce que l'on calcule, à partir de la vitesse, de l'accélération, du temps calculé à chaque fois et des données caractéristiques assignées des distances définies (C, $H_q$, $S_q$, $\alpha_1$, $\alpha_2$), les longueurs des parties respectives (l) et, à partir de celles-ci, en utilisant ladite fonction, le diamètre (d) de la roue (25).

**4.** Procédé selon l'une des revendications 1 à 3, caractérisé en ce que l'on fait rouler les roues (25) d'un jeu de roues (24) sur des rails respectifs (2), les rails définissant un plan de roulement qui est identique au plan de référence (2').

**5.** Procédé pour déterminer le diamètre des roues de jeux de roues de véhicules sur rails, caractérisé en ce qu'un faisceau de rayons électromagnétique (26') présentant un axe médian et s'étendant dans le plan du diamètre (d) à mesurer est dévié dans ce plan, perpendiculairement à l'axe médian du faisceau de rayons (26'), par rapport à la roue (25), jusqu'à ce que le faisceau de rayons ait touché deux fois de façon tangente la surface périphérique de la roue (25), en ce que le rayonnement réfléchi lors du contact tangentiel de la surface périphérique de la roue est détecté et l'espace parcouru par le faisceau de rayons (26') et situé entre les deux points de contact et correspondant au diamètre de la roue est calculé.

**6.** Dispositif pour déterminer le diamètre des roues de jeux de roues de véhicules sur rails, caractérisé en ce qu'il est prévu, pour un jeu de roues (24), un dispositif porteur ainsi qu'un dispositif comportant au moins deux faisceaux de rayons électromagnétiques rayonnants (26', 26'') qui présentent chacun un axe médian et s'étendent au moins approximativement dans le plan (3) du diamètre (d) à mesurer, qui présentent dans ce plan (3) un écartement fondamental (C) les uns par rapport aux autres, et sont disposés pour pouvoir être déplacés dans ce plan et perpendiculairement à leur axe médian, par rapport au jeu de roues, en conservant leur écartement fondamental, et comportant au moins un dispositif optique récepteur ou un récepteur (27, 28) associé à chaque faisceau de rayons (26', 26'') et destiné à détecter un rayonnement (34) réfléchi lors d'un contact tangentiel entre la surface périphérique de la roue et le faisceau de rayons, lesdits dispositifs optiques récepteurs ou les récepteurs (27, 28) étant reliés à un dispositif de détection de temps (33) et à un dispositif d'évaluation (35), et les rayons ayant une longueur d'ondes de 200 - 2000 nm.

**7.** Dispositif selon la revendication 6, caractérisé en ce que le dispositif porteur comporte un rail pour chaque roue (25) d'un jeu de roues, les rails définissant un plan de roulement (2'), et en ce que les faisceaux de rayons électromagnétiques sont des faisceaux de rayons lasers (26', 26'').

13

**8.** Dispositif selon la revendication 6 ou 7, caractérisé en ce qu'il est prévu une multiplicité de faisceaux de rayons lasers et de dispositifs optiques récepteurs associés, en déport les uns par rapport aux autres suivant une certaine distance.

**9.** Dispositif selon la revendication 8, caractérisé en ce que le déport est inférieur à l'écartement fondamental (c).

**10.** Dispositif selon l'une des revendications 7 à 9, caractérisé en ce que les faisceaux de rayons prévus (8, 29, 29', 12-17) présentent entre eux des écartements $S_q$ et X choisis librement qui sont inférieurs au diamètre à mesurer le plus petit, sont disposés à une distance $H_q$ du plan de roulement (2') choisie librement, et sont divisés en deux groupes, avec les dispositifs optiques collecteurs (10, 9, 9', 18-23) qui leur sont associés, par un plan perpendiculaire au plan de roulement (2') et parallèle à un axe de jeu de roues (36), les faisceaux de rayons étant orientés de telle sorte que chaque faisceau de rayons (8 ; 12-14) du premier groupe s'étend de façon divergente par rapport à chaque faisceau de rayons (29, 29' ; 15-17) du second groupe.

**11.** Dispositif selon la revendication 10, caractérisé en ce que ledit plan définit la bissectrice des faisceaux de rayons s'étendant de façon divergente.

**12.** Dispositif selon l'une des revendications 10 ou 11, caractérisé en ce que les faisceaux de rayons (12-14 ; 15-17 ; 29, 29') d'un groupe sont parallèles les uns aux autres.

**13.** Dispositif selon l'une des revendications 10 à 12, caractérisé en ce que le groupe situé côté entrée se compose d'au moins un faisceau de rayons (8) comportant un dispositif optique récepteur (10), tandis que le groupe situé côté sortie se compose d'au moins deux faisceaux de rayons (29, 29') comportant des dispositifs optiques récepteurs (9, 9').

**14.** Dispositif selon l'une des revendications 7 à 13, caractérisé en ce que les lasers prévus pour produire des faisceaux de rayons lasers forment, réunis par groupes (6, 6') ou dans leur ensemble (7), des modules émetteurs (6, 6' ; 7).

**15.** Dispositif selon l'une des revendications 7 à 14, caractérisé en ce que chaque laser prévu pour les faisceaux de rayons lasers (4, 8, 12-17, 29, 29') est disposé pour pouvoir pivoter sur un axe (30) et être immobilisé.

**16.** Dispositif selon la revendication 6, caractérisé en ce qu'il est prévu des dispositifs pour diviser (31) et dévier (32) au moins un faisceau de rayons (37).

**17.** Dispositif selon l'une des revendications 6 à 16, caractérisé en ce que chaque faisceau de rayons est focalisé de sorte que sa taille est située dans la zone escomptée (38) pour le contact avec la roue (25).

**18.** Dispositif selon l'une des revendications 6 à 17, caractérisé en ce que les dispositifs prévus pour produire les faisceaux de rayons (26', 26'') et les dispositifs optiques récepteurs ou les récepteurs (27, 28) associés sont disposés sur un chariot de mesure déplaçable (42) qui coopère avec un dispositif de mesure de déplacement (43, 44) qui peut être relié ou est apte à être relié de son côté au dispositif d'évaluation (35) par l'intermédiaire d'une liaison (45).

Figur 1

Figur 2

Figur 3

Figur 4

Figur 5

EP 0 208 060 B1